# EUROPÄISCHE PATENTANMELDUNG

(11) **EP 4 668 245 A1**
(43) Veröffentlichungstag der Anmeldung: **24.12.2025**
(21) Anmeldenummer: 25181694.8
(22) Anmeldetag: 10.06.2025
(51) Int. Cl.: G08G 1/04, G08G 1/054, H04N 25/47, G01S 17/58, H04N 25/705, G01S 17/894

(54) **VERKEHRSÜBERWACHUNGSVORRICHTUNG, VERKEHRSÜBERWACHUNGSSYSTEM UND VERFAHREN**

(30) Priorität: 18.06.2024 EP 24182965
(71) Anmelder: Kistler Holding AG, 8408 Winterthur (CH)
(72) Erfinder: Braner, Sebastian, 88271 Wilhelmsdorf (DE)

(57) **Zusammenfassung**

Die Erfindung betrifft eine Verkehrsüberwachungsvorrichtung (10) mit zumindest einer Erfassungseinheit (12) zur Geschwindigkeitserfassung zumindest eines Fahrzeugs (14, 16) auf einer Fahrbahn (18) auf Basis von relativen Änderungen einer Lichtintensität, welche durch das Fahrzeug (14, 16) erzeugt werden.

Um eine gattungsgemässe Vorrichtung mit verbesserten Eigenschaften hinsichtlich einer Effizienz bereitzustellen, wird vorgeschlagen, dass die Erfassungseinheit (12) zumindest einen ereignisbasierten Bildsensor (20) aufweist, welcher eine Pixelmatrix (22) mit einer Vielzahl von Pixeln (24, 26) umfasst, wobei die Pixel (24, 26) jeweils dazu ausgebildet sind, relative Änderungen der Lichtintensität voneinander unabhängig und asynchron als Ereignisse (28, 30) zu erfassen.

## Beschreibung

### Technisches Gebiet

Die Erfindung betrifft eine Verkehrsüberwachungsvorrichtung nach dem Oberbegriff des Anspruchs 1, ein Verkehrsüberwachungssystem nach Anspruch 10 sowie ein Verfahren zur Ermittlung einer Geschwindigkeit von zumindest einem Fahrzeug nach dem Oberbegriff des Anspruchs 11.

### Stand der Technik

Das Fahren mit überhöhter Geschwindigkeit stellt eine der häufigsten Unfallursachen dar. Vorrichtungen zur Verkehrsüberwachung können daher zur Verbesserung der Verkehrssicherheit beitragen. Aus dem Stand der Technik ist bereits eine Vielzahl derartiger Vorrichtungen bekannt, welche auf unterschiedlichen Technologien, beispielsweise auf Radar, Lidar oder Induktionsschleifen, basieren. Es sind auch Verkehrsüberwachungsvorrichtungen auf Basis von unterschiedlichen optischen Sensoren bekannt. Beispielsweise offenbart die EP 0 042 546 A1 ein Geschwindigkeitsmesssystem mit drei in Bewegungsrichtung eines Messobjekts, in einem bestimmten Abstand zueinander angeordneten Reflexionsschranken, welche durch aktive Lichtquellen erzeugt werden. Ferner sind aus dem Stand der Technik auch so genannte Einseitensensoren bekannt, welche die Geschwindigkeit von Fahrzeugen auf Basis von relativen Änderungen einer Lichtintensität bei der Fahrzeugdurchfahrt mittels passiver Kontrastdioden erfassen, welche, jeweils mit einem eigenen Objektiv versehen, in einer Reihe zueinander beabstandet und jeweils senkrecht zur Fahrtrichtung ausgerichtet sind. Dadurch ist keine aktive Lichtquelle mehr erforderlich. Nachteile dieser bisher bekannten Verkehrsüberwachungsvorrichtungen auf Basis optischer Sensoren sind ein hoher Platzbedarf für die zueinander beabstandet angeordneten aktiven Reflexionsschranken oder passiven Kontrastdioden sowie die damit verbundenen hohe Kosten. Ein weiterer Nachteil dieser vorbekannten Verkehrsüberwachungsvorrichtungen besteht darin, dass die aktiven Reflexionsschranken sehr präzise und jeweils in gleichem Abstand und Neigungswinkel zu der Fahrbahn ausgerichtet werden müssen, was regelmässig zu Bedienfehlern und damit zur Verwerfung von Messungen oder einer Erhöhung der Toleranz von gemessenen Geschwindigkeiten führt. Bei vorbekannten Verkehrsüberwachungsvorrichtungen mit passiven Kontrastdioden ist dieser Nachteil geringer, jedoch leidet die Messperformance unter einer unzureichenden Ausrichtungsgenauigkeit, da Geschwindigkeiten unterschätzt werden. Zudem ist die Genauigkeit durch der vom Gehäuse limitierten Beabstandung zwischen den einzelnen Kontrastdioden.

Die Aufgabe der Erfindung besteht insbesondere darin, eine gattungsgemässe Vorrichtung sowie ein gattungsgemässes Verfahren mit verbesserten Eigenschaften hinsichtlich einer Effizienz bereitzustellen. Die Aufgabe wird erfindungsgemäss durch die Merkmale der Ansprüche 1, 10 und 11 gelöst, während vorteilhafte Ausgestaltungen und Weiterbildungen der Erfindung den Unteransprüchen entnommen werden können.

### Darstellung der Erfindung

Die Aufgabe wird durch die Merkmale der unabhängigen Ansprüche gelöst.

Die Erfindung geht aus von einer Verkehrsüberwachungsvorrichtung mit zumindest einer Erfassungseinheit zur Geschwindigkeitserfassung zumindest eines Fahrzeugs auf einer Fahrbahn auf Basis von relativen Änderungen einer Lichtintensität, welche durch das Fahrzeug erzeugt werden.

Es wird vorgeschlagen, dass die Erfassungseinheit zumindest einen ereignisbasierten Bildsensor aufweist, welcher eine Pixelmatrix mit einer Vielzahl von Pixeln umfasst, wobei die Pixel jeweils dazu ausgebildet sind, relative Änderungen der Lichtintensität voneinander unabhängig und asynchron als Ereignisse zu erfassen.

Durch eine derartige Ausgestaltung kann vorteilhaft eine besonders effiziente Verkehrsüberwachungsvorrichtung bereitgestellt werden. Es kann vorteilhaft eine Material- und Bauraumeffizienz verbessert werden, indem eine Anzahl von Bauteilen, beispielsweise eine Anzahl von Objektiven, gegenüber bisher bekannten Lösungen, deutlich reduziert werden kann. Es kann so eine besonders kompakte Verkehrsüberwachungsvorrichtung bereitgestellt werden. Weiter kann vorteilhaft eine Kosteneffizienz verbessert und somit eine besonders preiswerte Verkehrsüberwachungsvorrichtung bereitgestellt werden. Da die Pixel des ereignisbasierten Bildsensors, welche nicht durch Änderungen der Lichtintensität angeregt werden, nicht ausgelöst werden, werden bei statischen Szenen keine Ereignisse erfasst. Dies ermöglicht einen besonders energieeffizienten Betrieb der Verkehrsüberwachungsvorrichtung bei vergleichsweise geringen Datenvolumina. Zudem kann vorteilhaft eine Justage deutlich vereinfacht werden, wenn die Erfassungseinheit zumindest einen ereignisbasierten Bildsensor aufweist, da im Vergleich zu einer bislang erforderlichen Ausrichtung von mehreren Sensoren nunmehr nur die Ausrichtung eines einzigen ereignisbasierten Bildsensors zur Fahrbahn ausreichend ist, um eine präzise und zuverlässige Erfassung der Fahrzeuggeschwindigkeit zu ermöglichen. Abweichungen in der Horizontalen können sogar im Nachhinein noch digital nachjustiert werden. Durch die hohe Pixeldichte spielt die horizontale Ausrichtung gegenüber der Straße praktisch keine Rolle. Selbst wenn sich ein Fahrzeug im Extremfall diagonal über den ereignisbasierten Bildsensor bewegt, kann eine Geschwindigkeit des Fahrzeugs durch entsprechende Kalibrierung der tatsächlichen Horizontalen des Bildbereichs erfasst werden. Die tatsächliche Horizontale kann beispielsweise aus der Bewegungsrichtung einer zeitlichen Abfolge von erfassten Ereignissen ermittelt werden. Dies ist bei einer vorgängigen Kalibrierung möglich, kann aber auch für jedes erfasste Fahrzeug einzeln erfolgen. Hierdurch ergibt sich ein deutlich gesteigerter Bedienkomfort sowie eine erhebliche Reduktion von Messfehlern. Ferner kann mittels der erfindungsgemässen Verkehrsüberwachungsvorrichtung vorteilhaft eine gleichzeitige Erfassung mehrerer Fahrzeuge ermöglicht werden.

Die erfindungsgemässe Verkehrsüberwachungsvorrichtung kann als ein Teil, insbesondere als eine Unterbaugruppe, einer Verkehrsüberwachungsanlage, welche alternativ auch als Geschwindigkeitsmessanlage oder umgangssprachlich als «Blitzer» bezeichnet werden kann, ausgebildet sein. Denkbar wäre jedoch auch, dass die Verkehrsüberwachungsvorrichtung die gesamte Verkehrsüberwachungsanlage ausbildet.

Die Erfassungseinheit der Verkehrsüberwachungsvorrichtung weist den zumindest einen ereignisbasierten Bildsensor auf, kann jedoch auch mehrere, beispielsweise zwei, drei, vier oder mehr, ereignisbasierte Bildsensoren aufweisen. Ereignisbasierte Bildsensoren (event based sensor, EVS) unterscheiden sich grundlegend von herkömmlichen Bildsensoren, beispielsweise herkömmlichen CMOS-Sensoren mit fester Auslesefrequenz (frame based sensor (FBS)) oder CCD-Sensoren, welche die Bildhelligkeit kodieren und unabhängig von der Aktivität der Szene ein konstantes Datenvolumen mit einer festen Bildrate erzeugen. Im Gegensatz dazu sind die Pixel des ereignisbasierten Bildsensors der Erfassungseinheit jeweils dazu ausgebildet, relative Änderungen der Lichtintensität voneinander unabhängig und asynchron als Ereignisse zu erfassen. Jedes Pixel des ereignisbasierten Bildsensors ist selbstsignalisierend und dazu ausgebildet, einzeln, das heisst unabhängig von anderen Pixeln des ereignisbasierten Bildsensors, und vorzugsweise in Echtzeit, auf relative Änderungen der Lichtintensität zu reagieren. Die Pixel des ereignisbasierten Bildsensors sind somit jeweils als eigenständige Photodetektoren ausgebildet. Beispiele für ereignisbasierte Bildsensoren in Abgrenzung zu oben genannten herkömmlichen Bildsensoren sind in Activity-Driven, Event-Based Vision Sensors", T. Delbrück, et al., Proceedings of 2010 IEEE International Symposium on Circuits and Systems (ISCAS), pp. 2426-2429 , in EP3424211A1 oder in EP3732875A1 gezeigt. Eine Ausgestaltung des ereignisbasierten Bildsensors ist dabei nicht auf einen bestimmten Typ von Photodetektor beschränkt. Pixel der Pixelmatrix des ereignisbasierten Bildsensors können, ohne darauf beschränkt zu sein, beispielsweise als Photodioden und/oder als Photozellen und/oder als Phototransistoren und/oder Photowiderstände und/oder dergleichen ausgebildet sein.

Die Pixelmatrix des ereignisbasierten Bildsensors weist eine bestimmte Anzahl von Zeilen und Spalten auf, sodass jedem Pixel innerhalb der Pixelmatrix eindeutige Koordinaten zuordenbar sind. Die Pixelmatrix ist dabei nicht auf eine bestimmte Anzahl von Zeilen und/oder Spalten beschränkt. Derzeit am Markt erhältliche ereignisbasierte Bildsensoren weisen beispielsweise Pixelmatrizen mit 1280 Spalten und 720 Zeilen auf. Im Rahmen der Erfindung kann die Pixelmatrix des ereignisbasierten Bildsensors der Erfassungseinheit demgegenüber jedoch auch eine niedrigere oder höhere Anzahl von Zeilen und/oder Spalten und damit eine niedrigere oder höhere Gesamtanzahl an Pixeln aufweisen, sodass insbesondere eine flexible Anpassung der Grösse und Auflösung des ereignisbasierten Bildsensors an unterschiedliche Einsatzbedingungen, beispielsweise an eine Breite der zu überwachenden Fahrbahn und/oder eine Anzahl an zu überwachenden Fahrspuren und/oder dergleichen, möglich ist.

Der ereignisbasierte Bildsensor weist eine dynamische Samplerate auf, welche insbesondere zumindest 0.5 Millionen Events pro Sekunde, vorteilhaft zumindest 0.6 Millionen Events pro Sekunde, besonders vorteilhaft zumindest 0.7 Millionen Events pro Sekunde, vorzugsweise zumindest 0.8 Millionen Events pro Sekunde, bevorzugt zumindest 0.9 Millionen Events pro Sekunde und besonders bevorzugt bis zu 1.0 Millionen Events pro Sekunde, beträgt.

Weiterführende Informationen zur Funktionsweise von ereignisbasierten Bildsensoren können beispielsweise der WO 2019/129790 A1 entnommen werden.

Vorzugsweise sind Teilbereiche der Pixelmatrix, bevorzugt jedes einzelne Pixel der Pixelmatrix, einzeln aktivierbar und deaktivierbar ausgebildet. Hierdurch kann vorteilhaft eine flexible Anpassung an individuelle Rahmenbedingungen ermöglicht werden. Beispielsweise können einzelnen Teilbereiche eines Bildbereichs des ereignisbasierten Bildsensors, welche für eine Verkehrsüberwachung nicht relevant sind, deaktiviert werden, um einen Übertragungsrate zu erhöhen. Zugleich kann hierdurch auch ein Energieverbrauch und/oder eine Datenvolumen weiter reduziert werden. Denkbar ist auch eine gezielte Deaktivierung von Störquellen in Teilbereichen des Bildbereich des ereignisbasierten Bildsensors, beispielsweise von Quellen für regelmässig wiederkehrenden Änderungen der Lichtintensität, wie zum Beispiel Warnleuchten, Ampeln, Baustellenbeleuchtungen und dergleichen.

Da eine Erfassung von Ereignissen mittels des ereignisbasierten Bildsensors nicht getaktet erfolgt, findet während der Erfassung von Ereignissen selbst noch keine Zeitquantisierung statt. Der ereignisbasierte Bildsensor weist daher vorzugsweise zumindest eine Zeitmesseinheit, insbesondere zumindest eine Uhr, zur präzisen Erfassung von Zeitpunkten des Auftretens von Ereignissen auf. Bevorzugt weist die Uhr eine zeitliche Auflösung zumindest im Bereich von Millisekunden, vorzugsweise zumindest im Bereich von Microsekunden, auf. Vorzugsweise weist der ereignisbasierte Bildsensor zumindest eine Quantisierungseinheit auf, welche die Uhr umfasst. Die Quantisierungseinheit ist mit der Pixelmatrix verbunden und dazu ausgebildet, Ereignisse, welche durch die Pixel erfasst und von diesen als analoge Signale ausgegeben werden, in digitale Signale zu wandeln und jedem Ereignis zumindest die Koordinaten des Pixels, durch welches es erfasst wurde, sowie einen eindeutigen Zeitpunkt zuzuordnen. Die Quantisierungseinheit kann den erfassten Ereignissen darüber hinaus weitere Parameter zuordnen, beispielsweise einen absoluten Betrag der erfassten relativen Änderung der Lichtintensität und/oder eine Lichtpolarität, als Kenngrösse dafür, ob es sich bei der erfassten relativen Änderung der Lichtintensität um eine Zu- oder Abnahme der Lichtintensität relativ zu einem Ausgangswert handelt, und/oder dergleichen. Die Quantisierungseinheit kann Teil eines BUS-Controllers für eine Schnittstelle des ereignisbasierten Bildsensors sein.

Theoretisch könnte der ereignisbasierte Bildsensor zu einer direkten Ausrichtung auf die Fahrbahn, ohne weitere davor installierte optische Instrumente, eingerichtet sein. Bevorzugt weist die Erfassungseinheit jedoch zumindest ein, insbesondere genau ein, Objektiv auf, welches in einem montierten Zustand derart vor dem ereignisbasierten Bildsensor angeordnet ist, sodass Licht durch das Objektiv hindurch auf die Pixelmatrix des ereignisbasierten Bildsensors auftreffen kann. Das Objektiv ist dazu eingerichtet, einen Abbildungsmassstab eines Bildbereichs des ereignisbasierten Bildsensors sowie eine Grösse eines erfassbaren Bildausschnitts zu bestimmen. Je nach Bedarf können daher Objektive mit unterschiedlichen Brennweiten und/oder Bildwinkeln zum Einsatz kommen. Wenn die Erfassungseinheit ein Objektiv aufweist, ist es zweckmässig eine Verzeichnungskorrektur des Objektivs bei einer Inbetriebnahme der Verkehrsüberwachungsvorrichtung zu kalibrieren, insbesondere um Fehler bei der Geschwindigkeitserfassung aufgrund von Abbildungsfehlern im Bildbereich, die durch eine Verzeichnung des Objektivs bedingt sein können, zu vermeiden. Zudem ist es zweckmässig einen Abstand zwischen dem ereignisbasierten Bildsensor und erfassbaren Objekten in dessen Bildbereich zumindest bei der Inbetriebnahme der Verkehrsüberwachungsvorrichtung zu kalibrieren, um ein eindeutiges Verhältnis zwischen den räumlichen Abständen erfasster Ereignisse in dem Bildbereich und räumlichen Abständen realer Objekte, welche die Auslöser der erfassten Ereignisse darstellen, zu definieren und der Geschwindigkeitserfassung zugrunde zu legen.

Der Abstand zwischen dem ereignisbasierten Bildsensor und erfassbaren Objekten in dessen Bildbereich könnte bei der Inbetriebnahme der Verkehrsüberwachungsvorrichtung einmalig oder regelmässig wiederkehrend während eines Betriebs, beispielsweise mittels eines portablen Entfernungsmessgeräts, ermittelt, gespeichert und bei der Geschwindigkeitserfassung zu Grunde gelegt werden. In einer vorteilhaften Ausgestaltung der Erfindung wird jedoch vorgeschlagen, dass die Erfassungseinheit zumindest einen Entfernungssensor zur Erfassung einer Entfernung zwischen dem ereignisbasierten Bildsensor und dem Fahrzeug auf der Fahrbahn umfasst. Durch eine derartige Ausgestaltung kann vorteilhaft eine Zuverlässigkeit der Geschwindigkeitserfassung verbessert werden. Zudem kann vorteilhaft ein Bedienkomfort erhöht werden, da eine händische Entfernungsmessung entfällt. Der Entfernungssensor der Erfassungseinheit könnte beispielsweise als ein akustischer Entfernungssensor, zum Beispiel als ein Ultraschallsensor, ausgebildet sein. Vorzugsweise ist der Entfernungssensor der Erfassungseinheit als ein optischer Entfernungssensor ausgebildet. In einer bevorzugten Ausgestaltung der Erfindung wird vorgeschlagen, dass der Entfernungssensor als ein TOF-Laserdistanzsensor ausgebildet ist. Hierdurch kann vorteilhaft eine besonders präzise und zuverlässige Entfernungsmessung erreicht werden. Zudem kann vorteilhaft eine einfache Kalibrierung des Bildbereichs des ereignisbasierten Bildsensors ermöglicht werden. Der TOF-Laserdistanzsensor ist dazu ausgebildet, einen gepulsten Laserstrahl auszusenden, welcher in dem Bildbereich des ereignisbasierten Bildsensors in Form von Ereignissen erfassbar ist. Das Akronym «TOF» steht für den Englischen Ausdruck «time of flight» und beschreibt ein dem Fachmann bekanntes Laufzeitverfahren zur Entfernungsmessung, wobei der TOF-Laserdistanzsensor dazu eingerichtet ist, dieses Laufzeitverfahren umzusetzen. Alternativ zu einem TOF-Laserdistanzsensor wäre beispielsweise auch ein Einsatz eines FMCW-Laserdistanzsensors («frequency modulation continous wave») grundsätzlich denkbar. Alternativ zu einem TOF-Laserdistanzsensor ist auch ein anderer LIDAR basierter Distanzsensor (LIDAR - Light Detection and Ranging), beispielsweise der bereits genannte TOF-Laserdistanzsensor oder ein phasenmodulierter Laserdistanzsensor denkbar. Eine weitere Alternative zum TOF-Laserdistanzsensor ist ein radarbasierter oder ultraschallbasierter Entfernungssensor mit einer Erfassungsrate von mindestens 1000 Erfassungen pro Sekunde (1000 Samples / Sekunde).

In einer vorteilhaften Ausgestaltung der Erfindung wird vorgeschlagen, dass eine optische Achse des ereignisbasierten Bildsensors zumindest im Wesentlichen deckungsgleich zu einer Messachse des Entfernungssensors ausgerichtet ist. Hierdurch kann vorteilhaft eine besonders präzise Kalibrierung und somit eine sehr zuverlässige Geschwindigkeitserfassung ermöglicht werden. Die optische Achse ist eine gedachte Symmetrieachse des ereignisbasierten Bildsensors. Wird der ereignisbasierte Bildsensor mit einem Objektiv verwendet, verläuft die optische Achse durch einen Brennpunkt des Objektivs. Die Messachse des Entfernungssensors ist eine gerade Linie, welche durch einen Ausgangspunkt an dem Entfernungssensor und einen Endpunkt an einem Objekt, dessen Entfernung erfasst werden soll, verläuft. Darunter, dass die optische Achse des ereignisbasierten Bildsensors «zumindest im Wesentlichen deckungsgleich» zu der Messachse des Entfernungssensors ausgerichtet ist, soll verstanden werden, dass die beiden Achsen, im Rahmen von fachüblichen Toleranzen, parallel und in einem Abstand von höchstens 50 cm zueinander, vorteilhafterweise 10 cm (10 Zentimeter) zueinander, angeordnet sind, sodass bei einer Betrachtung entlang einer senkrechten durch beide Achsen verlaufenden Geraden, nur eine der beiden Achsen sichtbar ist. Grössere Abstände der beiden Achsen sind denkbar, wobei jedoch die Messgenauigkeit dadurch verringert werden kann, insbesondere falls sich das Fahrzeug teilweise derart bewegt, dass sich der Abstand zum Bildsensor entlang der Messachse während der Durchfahrt ändert.

Zudem wird vorgeschlagen, dass die Erfassungseinheit eine Auswertungseinheit aufweist, welche mit einer Schnittstelle des ereignisbasierten Bildsensors verbunden und dazu ausgebildet ist, mittels zumindest eines Algorithmus die Geschwindigkeit des Fahrzeugs anhand einer zeitlichen Abfolge von zumindest zwei erfassten Ereignissen zu bestimmen. Hierdurch kann vorteilhaft eine effiziente Bestimmung der Fahrzeuggeschwindigkeit ermöglicht werden. Die Auswertungseinheit umfasst vorzugsweise einen digitalen Signalprozessor, auf welchem der Algorithmus ausführbar gespeichert ist. Vorzugsweise umfasst die Auswertungseinheit einen Pufferspeicher, bevorzugt einen First In - First out (FIFO) Pufferspeicher, welcher dazu ausgebildet ist, von dem ereignisbasierten Bildsensor erfasste und über die Schnittstelle übermittelte Ereignisse in der zeitlichen Abfolge ihrer Entstehung zwischenzuspeichern und zur weiteren Verarbeitung an den digitalen Signalprozessor zu übermitteln. Die Schnittstelle des ereignisbasierten Bildsensors ist vorzugsweise mit der Quantisierungseinheit verbunden und/oder in diese integriert. Als Schnittstelle des ereignisbasierten Bildsensors ist ein Einsatz von verschiedenen dem Fachmann bekannten Bussystemen denkbar. Der Algorithmus umfasst zumindest einen Auswertungsschritt, in welchem aus der zeitlichen Abfolge der zumindest zwei erfassten Ereignisse die Geschwindigkeit des Fahrzeugs, beispielsweise auf Basis einer Weg-Zeit-Berechnung, bestimmt wird. Der Algorithmus kann weitere Schritte, beispielsweise einen Erkennungsschritt zur Erkennung von Fahrzeugen aus einer Reihe von Ereignissen und/oder einen Überprüfungsschritt zur Überprüfung einer Plausibilität der bestimmten Geschwindigkeit, umfassen. Möglichkeiten zur Ermittlung einer Geschwindigkeit von zumindest einem Fahrzeug aus Ereignisdaten, welche durch den ereignisbasierten Bildsensor erfasst wurden, sind Gegenstand des weiter unten beschriebenen erfindungsgemässen Verfahrens, wobei einzelne Verfahrensschritte des Verfahrens in dem Algorithmus implementiert sein können.

Weiterhin wird vorgeschlagen, dass die Erfassungseinheit zur zeitglichen Geschwindigkeitserfassung mehrerer Fahrzeuge auf verschiedenen Fahrstreifen der Fahrbahn ausgebildet ist. Hierdurch kann vorteilhaft eine Effizienz weiter gesteigert werden. Insbesondere bei Fahrbahnen mit vielen Fahrspuren, beispielsweise Autobahnen, erweist sich eine zeitgliche Geschwindigkeitserfassung mehrerer Fahrzeuge auf verschiedenen Fahrstreifen als vorteilhaft. Die Erfassungseinheit könnte eine zeitgleiche Geschwindigkeitserfassung von zumindest zwei, vier oder mehr Fahrzeugen durchführen. Die verschiedenen Fahrstreifen könnten mittelbar oder unmittelbar zueinander angeordnet sein. Bevorzugt ist die Erfassungseinheit dazu ausgebildet, eine zeitgleiche Geschwindigkeitserfassung mehrerer Fahrzeuge auf zwei unmittelbar nebeneinanderliegenden Fahrstreifen vorzunehmen. Denkbar wäre jedoch auch, dass sich die Fahrzeuge auf Fahrsteifen befinden, welche zueinander beabstandet sind und mittelbar, beispielsweise mittels eines Fahrradstreifens, eines Pflanzenabschnitts oder ähnlichem, miteinander verbunden sind.

Ferner wird vorgeschlagen, dass die Erfassungseinheit zu einer Geschwindigkeitserfassung des Fahrzeugs unabhängig von dessen Fahrtrichtung auf der Fahrbahn ausgebildet ist. Hierdurch kann vorteilhaft eine Flexibilität beim Einsatz der Verkehrsüberwachungsvorrichtung weiter erhöht werden. Beispielsweise kann eine zeitgleiche Überwachung mehrerer Fahrstreifen mit teilweise entgegengesetzten Fahrtrichtungen ermöglicht werden. Zusätzlich kann vorteilhaft auch eine Erkennung von Falschfahrern ermöglicht werden.

Zudem wird vorgeschlagen, dass die Erfassungseinheit als eine mobile Einheit ausgebildet ist und einen Energiespeicher zur netzunabhängigen Energieversorgung aufweist. Hierdurch kann vorteilhaft ein besonders einfacher, flexibler und bedarfsgerechter Einsatz der Verkehrsüberwachungsvorrichtung an verschieden Verkehrsbrennpunkten ermöglicht werden. Der Energiespeicher kann, ohne darauf beschränkt zu sein, beispielsweise als ein Akkumulator, zum Beispiel als ein Lithiumionenakkumulator oder dergleichen, ausgebildet sein. Vorzugsweise umfasst die Verkehrsüberwachungseinheit ein Stütz- und/oder Stabilisierungselement, beispielsweise eine Dreibeinstativ oder dergleichen, zur temporären Installation und Justage der Erfassungseinheit. Alternativ zu einer mobilen Einheit könnte die Erfassungseinheit auch zu einer ortsfesten Installation ausgebildet sein.

In einer vorteilhaften Ausgestaltung der Erfindung wird vorgeschlagen, dass die Erfassungseinheit in einem montierten Zustand neben der Fahrbahn angeordnet ist, wobei eine optische Achse des ereignisbasierten Bildsensors zumindest im Wesentlichen senkrecht zu einer Längserstreckung eines Teilabschnitts der Fahrbahn ausgerichtet ist. Durch eine derartige Ausgestaltung kann vorteilhaft eine hohe Messgenauigkeit bei der Anordnung der Verkehrsüberwachungsvorrichtung an verschiedenen Teilabschnitten von Fahrbahnen ermöglicht werden. Damit kann eine Effizienz der Verkehrsüberwachungsvorrichtung weiter gesteigert werden. In dem montierten Zustand ist die Erfassungseinheit zumindest temporär oder ortsfest installiert und justiert. Unter «zumindest im Wesentlichen senkrecht» soll hierbei unter einem Winkel zwischen 75° und 105°, vorzugsweise zwischen 85° und 95° und besonders vorteilhaft von 90° verstanden werden. Die Erfindung funktioniert jedoch ausdrücklich auch bei einer Ausrichtung der optischen Achse des ereignisbasierten Bildsensors, die nicht zumindest im Wesentlichen senkrecht zu einer Längserstreckung eines Teilabschnitts der Fahrbahn ist, wobei jedoch eine Geschwindigkeit ermittelt wird, die niedriger ist als die tatsächliche Geschwindigkeit eines Fahrzeugs. Der Teilabschnitt der Fahrbahn könnte im Wesentlichen geradlinig ausgebildet sein, sodass die Längserstreckung einer längsten Kante eines gedachten geometrischen Quaders entspricht, welcher den Teilabschnitt gerade noch vollständig umschliesst. Denkbar wäre jedoch auch, dass der Teilabschnitt der Fahrbahn kurvenförmig ausgebildet ist und seine Längserstreckung parallel zu einer Tangente an einem Scheitelpunkt der Kurve verläuft, wobei die optische Achse dann vorzugsweise so ausgerichtet ist, dass sie den Scheitelpunkt der Kurve des Teilabschnitts schneidet. Ein Einsatz der Erfassungseinheit ist jedoch nicht auf eine Anordnung neben der Fahrbahn beschränkt. Die Erfassungseinheit könnte in dem montierten Zustand alternativ auch über der Fahrbahn, beispielsweise an einer Brücke oder an einem Tunnel oder dergleichen, angeordnet sein.

Die Erfindung betrifft ferner ein Verkehrsüberwachungssystem mit zumindest einer Verkehrsüberwachungsvorrichtung nach einer der vorhergehend beschriebenen Ausgestaltungen, mit zumindest einer Kamera zur Erfassung eines Kennzeichens des Fahrzeugs und mit einer Kommunikationseinheit zur drahtlosen Kommunikation zwischen der Erfassungseinheit und der Kamera. Ein derartiges Verkehrsüberwachungssystem zeichnet sich insbesondere durch die zuvor beschriebenen vorteilhaften Eigenschaften der Verkehrsüberwachungsvorrichtung aus. Das Verkehrsüberwachungssystem könnte mehrere Kameras umfassen, welche jeweils auf je einen Fahrstreifen der Fahrbahn ausgerichtet sein könnten. Die Kamera(s) kann/können zusätzlich einen Blitz umfassen. Ein Blitz beleuchtet zumindest das Kennzeichnen des Fahrzeugs, kann aber auch das Fahrzeug und die umgebende Szenerie beleuchten. Ein Blitz kann auch den Fahrzeuginnenraum und/oder die Fahrerin oder den Fahrer beleuchten. Ein Blitz kann auch als Blitzeinheit beabstandet von der Kamera sein, wobei die Kommunikationseinheit drahtlose Kommunikation mit der Kamera und mit der Blitzeinheit erlaubt. Es sind auch mehrere Blitzeinheiten denkbar. Auch kann sowohl die Kamera einen Blitz aufweisen und optional eine Blitzeinheit oder mehrere Blitzeinheiten vorhanden sein. Die Kommunikationseinheit umfasst zumindest ein Kommunikationselement, welches mit der Erfassungseinheit verbunden, vorzugsweise in diese integriert, ist. Die Kommunikationseinheit umfasst zumindest ein weiteres Kommunikationselement, welches mit der Kamera verbunden, vorzugsweise in diese integriert, ist. Die Kommunikationselemente sind zu einer drahtlosen, vorzugsweise bidirektionalen, Kommunikation miteinander ausgebildet, welche nach einem geeigneten drahtlosen Kommunikationsstandard, beispielsweise ISM 433 MHz, ISM 868 MHz, Bluetooth, BLE, WLAN, WPAN, Infrarot oder dergleichen, erfolgen kann. Generell sind alle ISM Frequenzbänder (ISM Band - Industrial, Scientific and Medical Band) geeignet, die zur drahtlosen Datenübertragung geeignet sind. Die Erfassungseinheit ist dazu ausgebildet, bei Erfassung einer Geschwindigkeit eines Fahrzeugs, welche eine zulässige Höchstgeschwindigkeit überschreitet, ein Auslösesignal an die Kamera zur Erfassung des Kennzeichens des Fahrzeugs zu senden. Denkbar ist auch, dass die von der Kamera erfassten Bilder von Fahrzeugen mittels der Kommunikationseinheit drahtlos an eine externe Speichereinheit, gesendet werden, beispielsweise damit diese redundant gespeichert und/oder damit ein lokaler Speicher in der Kamera entlastet werden kann. Die externe Speichereinheit kann beispielsweise mit der Erfassungseinheit verbunden oder in diese integriert sein oder Teil eines externen, über das Internet mit der Kommunikationseinheit verbundenen, Datenservers sein.

Die Erfindung geht ferner aus von einem Verfahren zur Ermittlung einer Geschwindigkeit von zumindest einem Fahrzeug auf einer Fahrbahn auf Basis einer Erfassung von relativen Änderungen einer Lichtintensität, welche durch das Fahrzeug erzeugt werden.

Es wird vorgeschlagen, dass mittels eines ereignisbasierten Bildsensors, welcher eine Pixelmatrix mit einer Vielzahl von Pixeln umfasst, zumindest zwei relative Änderungen einer Lichtintensität durch zumindest zwei der Pixel als Ereignisse erfasst und die Geschwindigkeit des Fahrzeugs aus einer zeitlichen Abfolge von erfassten Ereignissen ermittelt wird. Hierdurch kann vorteilhaft ein besonders effizientes Verfahren zur Ermittlung einer Geschwindigkeit von Fahrzeugen bereitgestellt werden. Vorzugsweise wird das Verfahren mittels der zuvor beschriebenen Verkehrsüberwachungsvorrichtung durchgeführt. Das Verfahren umfasst insbesondere zumindest einen Erfassungsschritt, in welchem die Erfassung von Ereignissen erfolgt und zumindest einen, dem Erfassungsschritt zeitlich nachgelagerten, Auswertungsschritt, in welchem die Geschwindigkeit des Fahrzeugs aus der zeitlichen Abfolge von erfassten Ereignissen ermittelt wird. In dem Erfassungsschritt werden jedem erfassten Ereignis zumindest ein Zeitpunkt der Erfassung sowie die Koordinaten des Pixels, welches das jeweilige Ereignis erfasst hat, zugeordnet. In dem Auswertungsschritt kann zunächst eine Erkennung von Fahrzeugen aus den erfassten Ereignissen erfolgen, beispielsweise anhand einer Anzahl und zeitlichen Abfolge von Ereignissen in einzelnen Zeilen der Pixelmatrix. In dem Auswertungsschritt kann dann eine Ermittlung der Geschwindigkeit der Ereignisse anhand deren zeitlicher Abfolge und deren gegenseitiger Anordnung in einem Bildbereich des ereignisbasierten Bildsensors in der Einheit Pixel pro Sekunde erfolgen, welche anschliessend in eine Geschwindigkeit des Fahrzeugs in einer gewünschten Einheit, beispielsweise Kilometer pro Stunde oder Meilen pro Stunde, umgerechnet wird, wobei Umrechnungsfaktoren beispielsweise in einer Lookup-Tabelle, insbesondere in einem Speicher der Auswertungseinheit der Verkehrsüberwachungsvorrichtung, hinterlegt sein können. Vorzugsweise ist der Auswertungsschritt des Verfahrens in einem Algorithmus, welcher in der Auswertungseinheit der Verkehrsüberwachungsvorrichtung gespeichert ist, implementiert.

Vorzugsweise umfasst das Verfahren auch einen Kalibrierungsschritt, in welchem der Bildbereich des ereignisbasierten Bildsensors auf die erfasste Szenerie kalibriert wird. In dem Kalibrierungsschritt werden Abstände zwischen Bildpunkten des Bildbereichs auf Abstände zwischen in Form von Ereignissen erfassbaren Objekten innerhalb der Szenerie kalibriert. Vorzugsweise ist der Kalibrierungsschritt dem Erfassungsschritt zeitlich vorgelagert. In dem Kalibrierungsschritt wird zumindest eine Entfernungsmessung zwischen dem ereignisbasierten Bildsensor und zumindest einem Objekt innerhalb der Szenerie durchgeführt. Vorzugsweise erfolgt die Entfernungsmessung mittels eines Lasers, insbesondere gepulsten Lasers, welcher bevorzugt durch den Entfernungssensor der Erfassungseinheit der Verkehrsüberwachungsvorrichtung erzeugt wird, welche Entfernungsmessung für die Kalibrierung des Bildbereichs herangezogen wird. Es kann eine Messachse des Lasers als ein Punkt oder eine Linie aus einzelnen Ereignissen im Bildbereich des ereignisbasierten Bildsensors sichtbar sein und ebenfalls, zusammen mit der Entfernungsmessung, ebenfalls zur Kalibrierung genutzt werden. Wird ein Objektiv verwendet, welches vor dem ereignisbasierten Bildsensor angeordnet ist, werden dessen Brennweite und Bildwinkel bei der Kalibrierung des Bildbereichs berücksichtigt. Zudem wird in dem Kalibrierungsschritt vorzugsweise auch eine Verzeichnungskorrektur des Objektivs kalibriert.

Anhand dieser Abstandswerte wird dann die entsprechenden Kalibrierung für die Umrechnung der zeitliche Abfolge von Ereignissen von Pixel pro Sekunde (pixel/s) zu einer Geschwindigkeit in Metern pro Sekunde (m/s) oder Kilometer pro Stunde (km/h) durchgeführt.

Zudem wird vorgeschlagen, dass eine Plausibilität der bestimmten Geschwindigkeit anhand der zeitlichen Abfolge und einer gegenseitigen Anordnung derjenigen Pixel zueinander, deren erfasste Ereignisse bei der Ermittlung der Geschwindigkeit zugrunde gelegt werden, überprüft wird. Hierdurch kann eine Zuverlässigkeit des Verfahrens vorteilhaft erhöht werden. Vorzugsweise erfolgt eine Überprüfung der bestimmten Geschwindigkeit in einem Überprüfungsschritt des Verfahrens, welcher dem Auswertungsschritt zeitlich nachgelagert sein kann. Die Plausibilität der bestimmten Geschwindigkeit kann, ohne darauf beschränkt zu sein, beispielsweise durch Vergleich von Geschwindigkeiten aller Ereignisse, welche sich während eines Zeitintervalls der Erfassung entlang einer Horizontalen des Bildbereichs bewegen, überprüft werden. Der Überprüfungsschritt kann in dem Algorithmus, welcher in der Auswertungseinheit der Verkehrsüberwachungsvorrichtung gespeichert ist, implementiert sein.

Ist der Bildsensor mit seinen Kanten nicht horizontal zur Längserstreckung eines Teilabschnitts der Fahrbahn ausgerichtet, so erfolgt die Bewegung aller Ereignisse, welche sich während eines Zeitintervalls der Erfassung auf dem ereignisbasierten Bildsensor bewegen entlang einer schrägen Achse, die der Ausrichtung des Bildsensors entspricht. Diese Achse wird in diesem Fall derart kalibriert, dass auch die Geschwindigkeit von sich schräg über den Bildsensor bewegenden Ereignissen erfasst wird. So kann in einem Computerprogrammprodukt die Bewegungsrichtung der Ereignisse auf dem Bildsensor als derart kalibriert werden, dass die tatsächliche horizontale Ausrichtung innerhalb der Szenerie ermittelt wird. Die Ausrichtung des Bildsensors wird in diesem Fall für die Kalibrierung der Pixel des Bildsensors gegenüber der Szenerie berücksichtigt.

Einzelne Verfahrensschritte des Verfahrens können in einem Computerprogrammprodukt implementiert sein. Das Computerprogrammprodukt kann Befehle umfassen, welche bei der Ausführung durch einen Computer diesen veranlassen, zumindest den Auswertungsschritt und/oder den Überprüfungsschritt des Verfahrens auszuführen.

In einer vorteilhaften Ausgestaltung des Verfahrens wird vorgeschlagen, dass Ereignisse, welche in benachbarten Pixeln der Pixelmatrix auftreten, in zusammengehörige Ereignisgruppe gruppiert werden, deren Bewegungen entlang eines Bildbereichs des ereignisbasierten Bildsensors durch die Erfassung zeitlich nachgelagerter Ereignisse, die einer Ereignisgruppe zuordenbar sind, nachverfolgt werden, wobei die Geschwindigkeit des Fahrzeugs aus einer Geschwindigkeit einer Bewegung zumindest einer Ereignisgruppe entlang des Bildbereichs ermittelt wird. Eine solche Ausgestaltung ermöglicht vorteilhaft eine besonders zuverlässige Zuordnung zwischen erfassten Ereignissen und Fahrzeugen. Eine Zuordnung der zeitlich nachgelagerten Ereignisse zu einer Ereignisgruppe kann beispielsweise durch Vergleich von Beträgen der erfassten relativen Änderungen der Lichtintensität, welche den erfassten Ereignissen zugrundeliegenden, sowie anhand einer relativen Anordnung zwischen den jeweiligen Ereignissen und den jeweiligen zeitlich nachgelagerten Ereignissen zueinander erfolgen.

In einer alternativen vorteilhaften Ausgestaltung des Verfahrens wird vorgeschlagen, dass in einem Bildbereich des ereignisbasierten Bildsensors mehrere Regionen von Interesse definiert werden, welchen jeweils ein Teilbereich der Pixelmatrix zugeordnet wird, wobei die Geschwindigkeit des Fahrzeugs aus einem zeitlichen Abstand zwischen einem Auftreten von Ereignissen in zumindest zwei Regionen von Interesse, welche unterschiedliche Spalten der Pixelmatrix umfassen, ermittelt wird. Hierdurch kann das Verfahren besonders einfach und mit geringem Rechenaufwand durchgeführt werden.

Darüber hinaus wird vorgeschlagen, dass eine Plausibilität der bestimmten Geschwindigkeit anhand eines Vergleichs einer zeitlichen Abfolge von Ereignissen in zumindest zwei Regionen von Interesse, welche unterschiedliche Zeilen der Pixelmatrix umfassen, überprüft wird. Hierdurch kann vorteilhaft eine Fehleranfälligkeit reduziert, vorzugsweise minimiert, werden. Wird beispielsweise eine Differenz in den zeitlichen Abständen zwischen einem Auftreten von Ereignissen in jeweils zwei zueinander gleich beabstandeten Regionen von Interesse in unterschiedlichen Zeilen der Pixelmatrix festgestellt, kann darauf geschlossen werden, dass diese Ereignisse unterschiedlichen Objekten, insbesondere Fahrzeugen, zuzuordnen sind und die Messung kann verworfen werden. Werden zumindest zwei zeitlich aufeinanderfolgende Ereignisse in zumindest zwei Regionen von Interesse, welche unterschiedliche Zeilen der Pixelmatrix umfassen, erfasst, kann hieraus auch eine Schrägstellung einer Fahrzeugfront eines erfassten Fahrzeugs, beispielsweise aufgrund eines Spurwechsels, erfasst werden. Entsprechend kann eine ermittelte Geschwindigkeit unter Berücksichtigung der erfassten Schrägstellung korrigiert werden.

Die Verkehrsüberwachungsvorrichtung, das Verkehrsüberwachungssystem und das Verfahren sollen hierbei nicht auf die oben beschriebenen Anwendungen und Ausführungsformen beschränkt sein. Insbesondere kann/können die Verkehrsüberwachungsvorrichtung und/oder das Verkehrsüberwachungssystem zu einer Erfüllung einer hierin beschriebenen Funktionsweise eine von einer hierin genannten Anzahl von einzelnen Elementen, Bauteilen und/oder Einheiten abweichende Anzahl aufweisen. Das Verfahren kann eine von einer hierin genannten Anzahl abweichende Anzahl von Verfahrensschritten aufweisen. Zudem sollen bei den in diesem Dokument angegebenen Wertebereichen auch innerhalb der genannten Grenzen liegende Werte als offenbart und als beliebig einsetzbar gelten.

### Kurze Beschreibung der Zeichnungen

Im Folgenden wird die Erfindung beispielhaft anhand der Zeichnungen näher erläutert. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen. Es zeigen:
Fig. 1 eine schematische Darstellung eines Verkehrsüberwachungssystems mit zwei Kameras, einer Kommunikationseinheit und einer Verkehrsüberwachungsvorrichtung, welche einer Erfassungseinheit zur Geschwindigkeitserfassung zumindest eines Fahrzeugs auf einer Fahrbahn umfasst,
Fig. 2 die Erfassungseinheit mit einem ereignisbasierten Bildsensor und einem Entfernungssensor in einer schematischen Ansicht,
Fig. 3 eine weitere schematische Ansicht der Erfassungseinheit mit dem ereignisbasierten Bildsensor, welcher eine Pixelmatrix mit einer Vielzahl von Pixeln umfasst, und mit einer Auswertungseinheit, welche über eine Schnittstelle mit dem ereignisbasierten Bildsensor verbunden ist,
Fig. 4 ein schematisches Diagramm zur Darstellung eines Verfahrens zur Ermittlung einer Geschwindigkeit von zumindest einem Fahrzeug auf einer Fahrbahn,
Fig. 5 zwei schematische grafische Darstellungen eines Bildbereichs des ereignisbasierten Bildsensors für zwei aufeinanderfolgende Zeitintervalle zur Veranschaulichung eines ersten Ausführungsbeispiels des Verfahrens, und
Fig. 6 ,eine schematische grafische Darstellung eines Bildbereichs des ereignisbasierten Bildsensors in einem Zeitintervall zur Veranschaulichung eines zweiten Ausführungsbeispiels des Verfahrens.

### Wege zur Ausführung der Erfindung

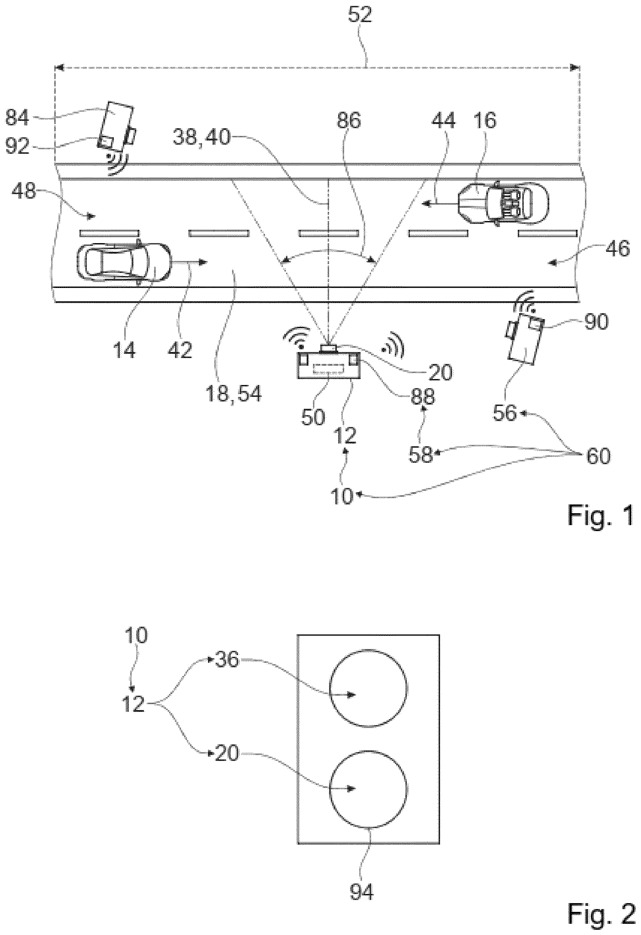

Figur 1 zeigt ein Verkehrsüberwachungssystems 60 in einer stark vereinfachten und schematischen Draufsicht. Das Verkehrsüberwachungssystem 60 umfasst eine Verkehrsüberwachungsvorrichtung 10.

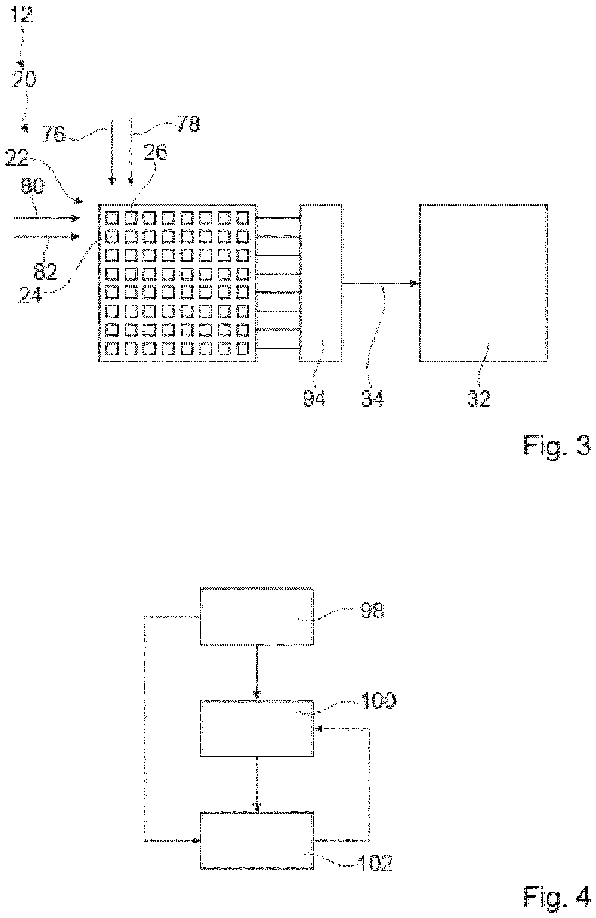

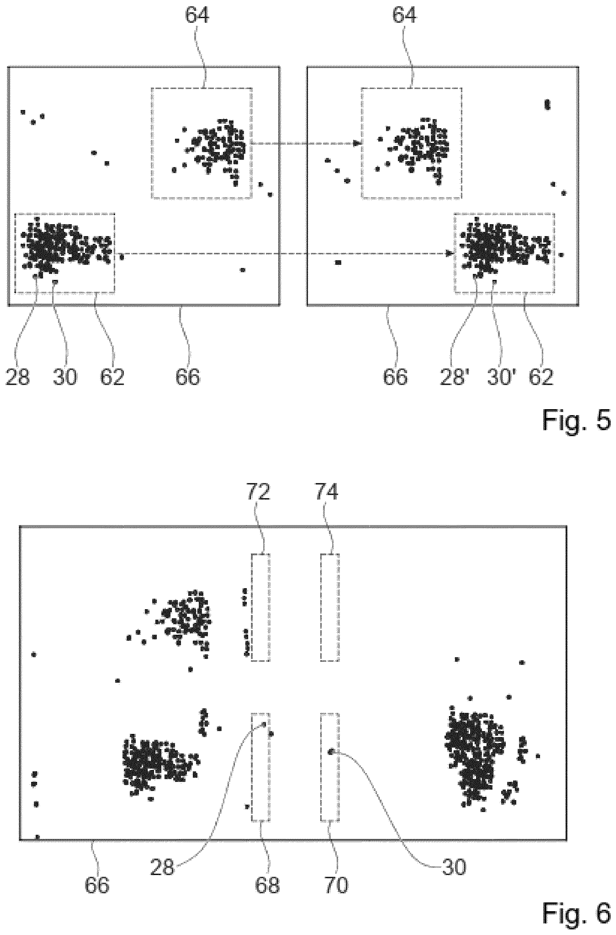

Die Verkehrsüberwachungsvorrichtung 10 umfasst zumindest eine Erfassungseinheit 12 zur Geschwindigkeitserfassung zumindest eines Fahrzeugs 14 auf einer Fahrbahn 18 auf Basis von relativen Änderungen einer Lichtintensität, welche durch das Fahrzeug 14 erzeugt werden. Die Erfassungseinheit 12 weist zumindest einen ereignisbasierten Bildsensor 20 auf. Der ereignisbasierte Bildsensor 20 umfasst eine Pixelmatrix 22 mit einer Vielzahl von Pixeln 24, 26 (vgl. Figur 3), wobei die Pixel 24, 26 jeweils dazu ausgebildet sind, relative Änderungen der Lichtintensität voneinander unabhängig und asynchron als Ereignisse 28, 30 (vgl. Figuren 5 und 6) zu erfassen.

Vorliegend ist die Erfassungseinheit 12 zur zeitglichen Geschwindigkeitserfassung mehrerer Fahrzeuge 14, 16 auf verschiedenen Fahrstreifen 46, 48 der Fahrbahn 18 ausgebildet. In der Figur 1 sind beispielhaft das Fahrzeug 14 und ein weiteres Fahrzeug 16 dargestellt, wobei sich das Fahrzeug 14 auf einem Fahrstreifen 46 und das weitere Fahrzeug 16 auf einem weiteren Fahrstreifen 48 der Fahrbahn 18 bewegt. Die Erfassungseinheit 12 ist jedoch nicht auf eine zeitgleiche Geschwindigkeitserfassung zweier Fahrzeuge 14, 16 beschränkt, sondern könnte auch die Geschwindigkeiten von drei, vier oder mehr Fahrzeugen 14, 16 zeitgleich erfassen, sofern sich diese zeitgleich innerhalb eines Sichtfeldes 86 des ereignisbasierten Bildsensors 20 bewegen. Ebenso könnte die Erfassungseinheit auch die Geschwindigkeiten von zwei oder mehr Fahrzeugen 14, 16, welche sich hintereinander auf einem der Fahrstreifen 44, 46 bewegen, zeitgleich erfassen, sofern sich diese zeitgleich innerhalb des Sichtfelds 86 befinden. Gleichermassen ist auch die gezeigte Anzahl von zwei Fahrstreifen 46, 48 der Fahrbahn 18 lediglich beispielhaft und nicht als limitierend für eine zeitgleiche Geschwindigkeitserfassung von Fahrzeugen 14, 16 durch die Erfassungseinheit 12 zu verstehen.

In der Figur 1 ist das Fahrzeug 14 beispielhaft mit einer Fahrtrichtung 42 und das weitere Fahrzeug 16 mit einer zu der Fahrtrichtung 42 entgegengesetzten weiteren Fahrtrichtung 44 dargestellt. Vorliegend ist die Erfassungseinheit 12 zu einer Geschwindigkeitserfassung des Fahrzeugs 14 unabhängig von dessen Fahrtrichtung 42 auf der Fahrbahn 18 ausgebildet. Die Erfassungseinheit 12 kann die Geschwindigkeit des Fahrzeugs 14 in der Fahrtrichtung 42 und die Geschwindigkeit des weiteren Fahrzeugs 16 in der dazu entgegengesetzten weiteren Fahrtrichtung 44 zeitgleich erfassen.

Die Erfassungseinheit 12 umfasst zumindest einen Entfernungssensor 36 (vgl. Figur 2) zur Erfassung einer Entfernung zwischen dem ereignisbasierten Bildsensor 20 und dem Fahrzeug 14 und/oder dem weiteren Fahrzeug 16 auf der Fahrbahn 18. Vorliegend ist der Entfernungssensor 36 als ein TOF-Laserdistanzsensor ausgebildet. Alternativ wäre jedoch auch ein Einsatz von anderen dem Fachmann bekannten Arten von Entfernungssensoren denkbar, ohne den Rahmen der vorliegenden Erfindung zu verlassen.

Eine optische Achse 38 des ereignisbasierten Bildsensors 20 ist zumindest im Wesentlichen deckungsgleich zu einer Messachse 40 des Entfernungssensors 36 ausgerichtet (vgl. Figur 1).

Die Erfassungseinheit 12 ist in einem montierten Zustand neben der Fahrbahn 18 angeordnet, wobei die optische Achse 38 des ereignisbasierten Bildsensors 20 zumindest im Wesentlichen senkrecht zu einer Längserstreckung 52 eines Teilabschnitts 54 der Fahrbahn 18 ausgerichtet ist. Vorliegend ist der Teilabschnitt 54 der Fahrbahn im Wesentlichen geradlinig ausgebildet. Alternativ könnte die Erfassungseinheit 12 in dem montierten Zustand jedoch auch neben einem kurvenförmigen Teilabschnitt (nicht gezeigt) der Fahrbahn 18 angeordnet sein, wobei die optische Achse 38 des ereignisbasierten Bildsensors 20 zumindest im Wesentlichen senkrecht zu einer Längserstreckung einer Kurve des Teilabschnitts ausgerichtet ist, wobei die Längserstreckung parallel zu einer Tangente durch einen Scheitelpunkt der Kurve des Teilabschnitts verläuft und die optische Achse 38 diesen Scheitelpunkt schneidet.

In dem vorliegenden Ausführungsbeispiel ist die Erfassungseinheit 12 als eine mobile Einheit ausgebildet und weist einen Energiespeicher 50 zur netzunabhängigen Energieversorgung auf. Der Energiespeicher 50 kann, ohne darauf beschränkt zu sein, beispielsweise als ein Akkumulator ausgebildet sein. Die Erfassungseinheit 12 kann beispielsweise auf einem Dreibeinstativ (nicht dargestellt) der Verkehrsüberwachungsvorrichtung 10 angeordnet sein, um die optische Achse 38 des ereignisbasierten Bildsensors 20 und die Messachse 40 des Entfernungssensors 36 jeweils im Wesentlichen parallel zu einer Oberfläche der Fahrbahn 18 ausrichten zu können. Die Erfassungseinheit 12 ist jedoch nicht auf einen Einsatz als mobile Einheit beschränkt und könnte alternativ auch zu einer ortsfesten Installation ausgebildet sein. Ebenso ist die Erfassungseinheit 12 nicht auf eine Anordnung neben der Fahrbahn 18 beschränkt, sondern könnte alternativ auch oberhalb der Fahrbahn, beispielsweise an einer Brücke oder an einem Tunnel, temporär oder ortsfest angeordnet sein (nicht gezeigt).

Neben der Verkehrsüberwachungsvorrichtung 10 weist das Verkehrsüberwachungssystem 60 zumindest eine Kamera 56 zur Erfassung eines Kennzeichens des Fahrzeugs 14 und eine Kommunikationseinheit 58 zur drahtlosen Kommunikation zwischen der Erfassungseinheit 12 und der Kamera 56 auf. Vorliegend ist die Kamera 56 neben der Fahrbahn 18 angeordnet und auf den Fahrstreifen 46 der Fahrbahn 18 ausgerichtet. Das Verkehrsüberwachungssystem 60 weist in dem vorliegenden Ausführungsbeispiel zudem eine weitere Kamera 84 zur Erfassung eines Kennzeichens des weiteren Fahrzeugs 16 auf, welche neben der Fahrbahn 18 angeordnet und auf den weiteren Fahrstreifen 48 der Fahrbahn 18 ausgerichtet ist. Die Kommunikationseinheit 58 umfasst zumindest ein Kommunikationselement 88 welches mit der Empfangseinheit 12 verbunden ist. Die Kommunikationseinheit 58 umfasst ausserdem ein weiteres Kommunikationselement 90, welches mit der Kamera 56 verbunden ist und ein weiteres Kommunikationselement 92, welches mit der weiteren Kamera 84 verbunden ist. Vorliegend sind die Kommunikationselemente 88, 90, 92 zu einer drahtlosen bidirektionalen Kommunikation, das heisst sowohl zum drahtlosen Senden als auch zum drahtlosen Empfangen von Daten, mittels eines drahtlosen Kommunikationsstandards, beispielsweise Bluetooth, WLAN oder dergleichen, ausgebildet. Überschreitet eine mittels der Erfassungseinheit 12 erfasste Geschwindigkeit eines der Fahrzeuge 14, 16 eine auf dem Teilabschnitt 54 zulässige Höchstgeschwindigkeit, sendet die Erfassungseinheit 12 mittels der Kommunikationseinheit 58 entsprechende Auslösesignale an die Kamera 56 und/oder die weitere Kamera 84 zur Kennzeichenerfassung.

Figur 2 zeigt die Erfassungseinheit 12 der Verkehrsüberwachungsvorrichtung 10 in einer stark vereinfachten schematischen Vorderansicht mit dem ereignisbasierten Bildsensor 20 und dem Entfernungssensor 36. Vorliegend ist der Entfernungssensor 36 oberhalb des ereignisbasierten Bildsensors 20 angeordnet, um die zumindest im Wesentlichen deckungsgleiche Ausrichtung zwischen der Messachse 40 des Entfernungssensors 36 und der optischem Achse 38 des ereignisbasierten Bildsensors 20 (vgl. Figur 1) zu ermöglichen. Die Erfassungseinheit weist ein Objektiv 94 auf, welches vor dem ereignisbasierten Bildsensor 20 derart angeordnet ist, dass Licht durch das Objektiv 94 hindurch auf die Pixelmatrix 22 (vgl. Figur 3) des ereignisbasierten Bildsensors 20 auftreffen kann. Vor einer Inbetriebnahme der Verkehrsüberwachungsvorrichtung 10 wird eine Verzeichnungskorrektur des Objektivs 94 kalibriert.

Figur 3 zeigt die Erfassungseinheit 12 der Verkehrsüberwachungsvorrichtung 10 in einer weiteren stark vereinfachten schematischen Ansicht.

In der Figur 3 ist die Pixelmatrix 22 des ereignisbasierten Bildsensors 20 mit der Vielzahl von Pixeln 24, 26 dargestellt. Beispielhaft und zur vereinfachten Darstellung ist die Pixelmatrix 22 in der Figur 3 als eine 8 X 8 Matrix dargestellt und weist eine Gesamtanzahl von 64 Pixeln auf, wobei der Übersichtlichkeit halber, nicht jedes der Pixel mit einem Bezugszeichen versehen ist. Die Pixelmatrix 22 weist beispielhaft acht Spalten 76, 78 und acht Zeilen 80, 82 auf, wobei der Übersichtlichkeit halber, nicht jede der Spalten und Zeilen mit einem Bezugszeichen versehen ist. Anhand der Spalten 76, 78 und der Zeilen 80, 82 der Pixelmatrix 22 sind jedem der Pixel 24, 26 eindeutige Koordinaten zuordenbar. Beispielsweise ist das Pixel 24 in der Spalte 76 und in der Zeile 82 angeordnet und das Pixel 26 ist in der Spalte 78 und der Zeile 80 angeordnet. Die Pixelmatrix 22 könnte jedoch auch eine deutliche höhere oder niedrigere Anzahl an Spalten 76, 80 und/oder Zeilen 80, 82 und damit auch eine andere Gesamtanzahl an Pixeln 24, 26, als in der Figur 3 gezeigt, aufweisen.

Die Erfassungseinheit 12 weist eine Auswertungseinheit 32 auf. Die Auswertungseinheit 32 ist mit einer Schnittstelle 34 des ereignisbasierten Bildsensors 20 verbunden. Die Auswertungseinheit 32 ist dazu ausgebildet, mittels zumindest eines Algorithmus die Geschwindigkeit des Fahrzeugs 14, 16 (vgl. Figur 1) anhand einer zeitlichen Abfolge von zumindest zwei erfassten Ereignissen 28, 30 (vgl. Figuren 5 und 6) zu bestimmen.

Der ereignisbasierte Bildsensor weist vorliegend eine Quantisierungseinheit 94 auf, welche dazu ausgebildet ist, die durch die Pixel 24, 26 erfassten Ereignisse 28, 30 (vgl. Figuren 5 und 6), welche durch diese als analoge Signale generiert werden, in digitale Signale zu wandeln und über die Schnittstelle 34 an die Auswertungseinheit 32 zu übermitteln. Die Quantisierungseinheit 94 umfasst eine Uhr mit einer zeitlichen Auflösung zumindest im Bereich von Millisekunden. Überschreitet eine relative Änderung der Lichtintensität, welche von einem der Pixel 24, 26 erfasst wird, einen zuvor definierten Schwellenwert, so wird dies als Ereignis 28, 30 erfasst, wobei durch die Quantisierungseinheit 94 die Koordinaten des Pixels 24, 26, welcher das Ereignis 28, 30 erfasst hat, sowie der genaue Zeitpunkt des Ereignisses 28, 30 bestimmt und an die Auswertungseinheit 32 übermittelt wird.

Vorliegend umfasst die Auswertungseinheit 32 einen digitalen Signalprozessor und einen Pufferspeicher (nicht dargestellt), welcher dem digitalen Signalprozessor vorgeschaltet ist. Der Pufferspeicher ist als ein First In - First out (FIFO) Pufferspeicher ausgebildet, sodass die Ereignisse 28, 30 in der Reihenfolge ihrer Entstehung durch den digitalen Signalprozessor verarbeitet werden können.

Figur 4 zeigt ein schematisches Verfahrensfliessbild zur Darstellung eines Verfahrens zur Ermittlung einer Geschwindigkeit von zumindest einem Fahrzeug 14, 16 auf einer Fahrbahn 18 (vgl. Figur 1) auf Basis einer Erfassung von relativen Änderungen einer Lichtintensität, welche durch das Fahrzeug 14, 16 erzeugt werden.

In dem Verfahren werden mittels des ereignisbasierten Bildsensors 20, welcher die Pixelmatrix 22 mit der Vielzahl von Pixeln 22, 24 umfasst (vgl. Figur 3), zumindest zwei relative Änderungen einer Lichtintensität durch zumindest zwei der Pixel 22, 24 als Ereignisse 28, 30 erfasst und die Geschwindigkeit des Fahrzeugs 14, 16 aus einer zeitlichen Abfolge von erfassten Ereignissen 28, 30 (vgl. Figuren 5 und 6) ermittelt.

Das Verfahren kann mittels der Verkehrsüberwachungsvorrichtung 10 durchgeführt werden.

Das Verfahren umfasst zumindest einen Erfassungsschritt 98, in welchem die Ereignisse 28, 30 durch die Pixel 24, 26 der Pixelmatrix 22 erfasst werden. Das Verfahren umfasst zudem zumindest einen auf den Erfassungsschritt 98 folgenden Auswertungsschritt 100, in welchem die Geschwindigkeit des Fahrzeugs 14, 16 aus der zeitlichen Abfolge der erfassten Ereignissen 28, 30 ermittelt wird und zwar insbesondere durch die Auswertungseinheit 32 (vgl. Figur 3).

Vorliegend umfasst das Verfahren zudem einen Überprüfungsschritt 102. In dem Überprüfungsschritt 102 wird eine Plausibilität der bestimmten Geschwindigkeit anhand der zeitlichen Abfolge der erfassten Ereignisse 28, 30 und anhand einer gegenseitigen Anordnung derjenigen Pixel 24, 26 zueinander, deren erfasste Ereignisse 28, 30 bei der Ermittlung der Geschwindigkeit zugrunde gelegt werden, überprüft.

Zwei mögliche Wege zur Durchführung des Verfahrens werden anhand der Figuren 5 und 6 näher erläutert.

Figur 5 zeigt zwei vereinfachte grafische Darstellungen von Ereignissen 28, 30, welche innerhalb eines Bildbereichs 66 des ereignisbasierten Bildsensors 20 in aufeinanderfolgenden Zeitintervallen aufgetreten sind und welche durch die Pixel 24, 26 der Pixelmatrix 22 erfasst wurden. Eine linke Darstellung der Figur 5 zeigt den Bildbereich 66 während eines ersten Zeitintervalls. Eine rechte Darstellung der Figur 5 zeigt den Bildbereich 66 während eines zweiten Zeitintervalls, welcher dem ersten Zeitintervall zeitlich nachgelagert ist. Die Zeitintervalle können beispielsweise jeweils einen Zeitraum von 20 Millisekunden umfassen. Der Übersichtlichkeit halber sind nicht alle gezeigten Ereignisse 28, 30 mit Bezugszeichen versehen.

In einer ersten möglichen Ausführungsform des Verfahrens werden Ereignisse 28, 30, welche in benachbarten Pixeln 24, 36 der Pixelmatrix 22 auftreten, in zusammengehörige Ereignisgruppen 62, 64 gruppiert. Beispielsweise werden die Ereignisse 28, 30, welche in dem Erfassungsschritt 98 des Verfahrens erfasst wurden, zusammen mit einer Vielzahl von weiteren Ereignissen zu einer Ereignisgruppe 62 gruppiert. Weitere Ereignisse werden zu einer weiteren Ereignisgruppe 64 gruppiert. Die Gruppierung in Ereignisgruppen erfolgt in dem Auswertungsschritt 100 des Verfahrens. Bewegungen der Ereignisgruppen 62, 64 entlang des Bildbereichs 66 des ereignisbasierten Bildsensors 20 werden durch die Erfassung zeitlich nachgelagerter Ereignisse 28', 30', die einer Ereignisgruppe 62, 64 zuordenbar sind, nachverfolgt. Beispielsweise sind zwei nachgelagerte Ereignisse 28', 30', welche in dem zweiten Zeitintervall durch den ereignisbasierten Bildsensor 20 erfasst wurden, der Ereignisgruppe 62 zuordenbar. Die Zuordnung der zeitlich nachgelagerten Ereignisse 28', 30' zu der Ereignisgruppe 62 kann beispielsweise durch Vergleich von Beträgen der erfassten relativen Änderungen der Lichtintensität, welche den Ereignissen 28, 30, 28', 30' zugrundeliegen sowie anhand einer relativen Anordnung zwischen den jeweiligen Ereignissen 28, 30 und den jeweiligen zeitlich nachgelagerten Ereignisse 28', 30' zueinander erfolgen.

Die Geschwindigkeit des Fahrzeugs 14, 16 wird dann aus einer Geschwindigkeit einer Bewegung zumindest einer der Ereignisgruppen 62, 64 entlang des Bildbereichs 66 ermittelt. Wie aus den Darstellungen der Figur 5 ersichtlich ist, hat sich die Ereignisgruppe 62 ausgehend von dem ersten Zeitintervall von einem linken unteren Abschnitt des Bildbereichs 66 zu einem rechten unteren Abschnitt des Bildbereichs 60 in dem zweiten Zeitintervall bewegt. Zugleich hat sich die Ereignisgruppe 64 von einem rechten oberen Abschnitt des Bildbereichs 66 in dem ersten Zeitintervall zu einem mittleren oberen Abschnitt des Bildbereichs 66 in dem zweiten Zeitintervall bewegt. In dem gezeigten Ausführungsbeispiel könnte die Ereignisgruppe 62 beispielsweise dem Fahrzeug 14 und die Ereignisgruppe 64 dem Fahrzeug 16 (vgl. Figur 1) zuordenbar sein. Die Geschwindigkeiten der Bewegungen der Ereignisgruppen 62, 64 entlang des Bildbereichs 66 werden in dem Auswertungsschritt 100 des Verfahrens zunächst in der Einheit Pixel pro Sekunde ermittelt und anschliessend, unter Berücksichtigung der jeweiligen Entfernung zwischen dem ereignisbasierten Bildsensor 20 und dem Fahrzeug 14, 16, welche in dem Erfassungsschritt 96, insbesondere mittels des Entfernungssensors 36, erfasst werden können, in Geschwindigkeiten der Fahrzeuge 14, 16 in einer gewünschten Einheit, beispielsweise in Kilometer pro Stunde, umgerechnet.

Figur 6 zeigt eine vereinfachte grafische Darstellung von innerhalb des Bildbereichs 66 des ereignisbasierten Bildsensors 20 in einem Zeitintervall aufgetretenen Ereignissen 28, 30 zur Veranschaulichung einer zweiten möglichen Ausführungsform des Verfahrens.

In dem Bildbereich 66 des ereignisbasierten Bildsensors 20 werden mehrere Regionen von Interesse 68, 70, 72, 74 definiert. Jeder Region von Interesse 68, 70, 72, 74 wird jeweils ein Teilbereich der Pixelmatrix 20, welcher aus einem oder mehreren Pixeln 24, 26 bestehen kann, zugeordnet.

Eine Geschwindigkeit des Fahrzeugs 14, 16 wird in dem Auswertungsschritt 100 aus einem zeitlichen Abstand zwischen einem Auftreten von Ereignissen 28, 30 in zumindest zwei Regionen von Interesse 68, 70, welche unterschiedliche Spalten 76, 78 (vgl. Figur 3) der Pixelmatrix 22 umfassen, ermittelt. Die Geschwindigkeit des Fahrzeugs 14, 16 kann in dem Auswertungsschritt 100 des Verfahrens aus der zeitlichen Abfolge des Auftretens der Ereignisse 28, 30 in den Regionen von Interesse 68, 70 zunächst wiederum in der Einheit Pixel pro Sekunde ermittelt und anschliessend, unter Berücksichtigung der jeweiligen Entfernung zwischen dem ereignisbasierten Bildsensor 20 und dem Fahrzeug 14, 16, in eine Geschwindigkeiten in einer gewünschten Einheit, beispielsweise in Kilometer pro Stunde, umgerechnet werden.

In dem Überprüfungsschritt 102 des Verfahrens wird eine Plausibilität der bestimmten Geschwindigkeit anhand eines Vergleichs einer zeitlichen Abfolge von Ereignissen 28, 30 in zumindest zwei Regionen von Interesse 68, 72, welche unterschiedliche Zeilen 80, 82 (vgl. Figur 3) der Pixelmatrix 22 umfassen, überprüft. Treten beispielsweise zunächst in den Regionen von Interesse 68, 72 und anschliessend in den Regionen von Interesse 70, 74 jeweils zeitgleich Ereignisse 28, 30 auf, kann daraus geschlossen werden, dass diese Ereignisse 28, 30 demselben Fahrzeug 14, 16 zuzuordnen sind. Stimmt die bestimmte Geschwindigkeit aus dem zeitlichen Abstand zwischen einem Auftreten von Ereignissen 28, 30 in den Regionen von Interesse 68, 70 und eine bestimmte Geschwindigkeit aus dem zeitlichen Abstand zwischen einem Auftreten von Ereignissen 28, 30 in den Regionen von Interesse 72, 74 überein, kann davon ausgegangen werden, dass die Messung plausibel und valide ist. Ergibt sich hingegen eine Differenz in den zeitlichen Abständen zwischen einem Auftreten von Ereignissen 28, 30, welche in den Regionen von Interesse 68, 70 und den Regionen von Interesse 72, 74, die jeweils Pixel 24, 26 aus denselben Zeilen 80, 82 der Pixelmatrix 22 umfassen, lässt dies darauf schliessen, dass die erfassten Ereignisse durch unterschiedliche Fahrzeuge 14, 16 oder relativen Änderungen einer Lichtintensität, welche nicht auf Fahrzeuge 14, 16 zurückzuführen sind, hervorgerufen wurden. Die Messung kann dann verworfen werden. Werden in dem Erfassungsschritt 98 zeitlich aufeinanderfolgende Ereignisse 28, 30 in zumindest zwei Regionen von Interesse 68, 72, welche unterschiedliche Zeilen 80, 82 der Pixelmatrix 22 umfassen, erfasst, kann hieraus in dem Überprüfungsschritt 102 auch auf eine Schrägstellung einer Fahrzeugfront des Fahrzeugs 14, 16, beispielsweise aufgrund eines Spurwechsels, geschlossen werden. Entsprechend kann eine in dem Auswertungsschritt 100 erfasste Geschwindigkeit in dem Überprüfungsschritt 102 korrigiert werden.

### Bezugszeichenliste

- 10: Verkehrsüberwachungsvorrichtung
- 12: Erfassungseinheit
- 14: Fahrzeug
- 16: Fahrzeug
- 18: Fahrbahn
- 20: ereignisbasierter Bildsensor
- 22: Pixelmatrix
- 24: Pixel
- 26: Pixel
- 28: Ereignis
- 30: Ereignis
- 32: Auswertungseinheit
- 34: Schnittstelle
- 36: Entfernungssensor
- 38: optische Achse
- 40: Messachse
- 42: Fahrtrichtung
- 44: Fahrtrichtung
- 46: Fahrstreifen
- 48: Fahrstreifen
- 50: Energiespeicher
- 52: Längserstreckung
- 54: Teilabschnitt
- 56: Kamera
- 58: Kommunikationseinheit
- 60: Verkehrsüberwachungssystem
- 62: Ereignisgruppe
- 64: Ereignisgruppe
- 66: Bildbereich
- 68: Region von Interesse
- 70: Region von Interesse
- 72: Region von Interesse
- 74: Region von Interesse
- 76: Spalte
- 78: Spalte
- 80: Zeile
- 82: Zeile
- 84: weitere Kamera
- 86: Sichtfeld
- 88: Kommunikationselement
- 90: Kommunikationselement
- 92: Kommunikationselement
- 94: Objektiv
- 96: Quantisierungseinheit
- 98: Erfassungsschritt
- 100: Auswertungsschritt
- 102: Überprüfungsschritt

## Patentansprüche

1. Verkehrsüberwachungsvorrichtung (10) mit zumindest einer Erfassungseinheit (12) zur Geschwindigkeitserfassung zumindest eines Fahrzeugs (14, 16) auf einer Fahrbahn (18) auf Basis von relativen Änderungen einer Lichtintensität, welche durch das Fahrzeug (14, 16) erzeugt werden, **dadurch gekennzeichnet, dass** die Erfassungseinheit (12) zumindest einen ereignisbasierten Bildsensor (20) aufweist, welcher eine Pixelmatrix (22) mit einer Vielzahl von Pixeln (24, 26) umfasst, wobei die Pixel (24, 26) jeweils dazu ausgebildet sind, relative Änderungen der Lichtintensität voneinander unabhängig und asynchron als Ereignisse (28, 30) zu erfassen.

2. Verkehrsüberwachungsvorrichtung (10) nach Anspruch 1, **dadurch gekennzeichnet, dass** die Erfassungseinheit (12) eine Auswertungseinheit (32) aufweist, welche mit einer Schnittstelle (34) des ereignisbasierten Bildsensors (20) verbunden und dazu ausgebildet ist, mittels zumindest eines Algorithmus die Geschwindigkeit des Fahrzeugs (14, 16) anhand einer zeitlichen Abfolge von zumindest zwei erfassten Ereignissen (28, 30) zu bestimmen.

3. Verkehrsüberwachungsvorrichtung (10 nach Anspruch 1 oder 2, **dadurch gekennzeichnet, dass** die Erfassungseinheit (12) zumindest einen Entfernungssensor (36) zur Erfassung einer Entfernung zwischen dem ereignisbasierten Bildsensor (20) und dem Fahrzeug (14,16) auf der Fahrbahn (18) umfasst.

4. Verkehrsüberwachungsvorrichtung (10) nach Anspruch 3, **dadurch gekennzeichnet, dass** der Entfernungssensor (36) als ein LIDAR basierter Laserdistanzsensor, beispielsweise ein TOF-Laserdistanzsensor oder ein phasenmodulierter Laserdistanzsensor, oder als radarbasierter oder ultraschallbasierter Entfernungssensor mit mindestens 1000 Samples / Sekunde ausgebildet ist.

5. Verkehrsüberwachungsvorrichtung (10 nach Anspruch 3 oder 4, **dadurch gekennzeichnet, dass** eine optische Achse (38) des ereignisbasierten Bildsensors (20) zumindest im Wesentlichen deckungsgleich zu einer Messachse (40) des Entfernungssensors (36) ausgerichtet ist.

6. Verkehrsüberwachungsvorrichtung (10) nach einem der vorhergehenden Ansprüche, **dadurch gekennzeichnet, dass** die Erfassungseinheit (12) zu einer Geschwindigkeitserfassung des Fahrzeugs (14, 16) unabhängig von dessen Fahrtrichtung (42, 44) auf der Fahrbahn (18) ausgebildet ist.

7. Verkehrsüberwachungsvorrichtung (10) nach einem der vorhergehenden Ansprüche, **dadurch gekennzeichnet, dass** die Erfassungseinheit zur zeitglichen Geschwindigkeitserfassung mehrerer Fahrzeuge (14, 16) auf verschiedenen Fahrstreifen (46, 48) der Fahrbahn (18) ausgebildet ist.

8. Verkehrsüberwachungsvorrichtung (10) nach einem der vorhergehenden Ansprüche, **dadurch gekennzeichnet, dass** die Erfassungseinheit (12) als eine mobile Einheit ausgebildet ist und einen Energiespeicher (50) zur netzunabhängigen Energieversorgung aufweist.

9. Verkehrsüberwachungsvorrichtung (10) nach einem der vorhergehenden Ansprüche, **dadurch gekennzeichnet, dass** die Erfassungseinheit (12) in einem montierten Zustand neben der Fahrbahn (18) angeordnet ist, wobei eine optische Achse (38) des ereignisbasierten Bildsensors zumindest im Wesentlichen senkrecht zu einer Längserstreckung (52) eines Teilabschnitts (54) der Fahrbahn (18) ausgerichtet ist.

10. Verkehrsüberwachungssystem (60) mit zumindest einer Verkehrsüberwachungsvorrichtung (10) nach einem der vorhergehenden Ansprüche, mit zumindest einer Kamera (56) zur Erfassung eines Kennzeichens des Fahrzeugs (14, 16) und mit einer Kommunikationseinheit (58) zur drahtlosen Kommunikation zwischen der Erfassungseinheit (12) und der Kamera (56) oder der Kamera (56) und einer Blitzeinheit.

11. Verfahren zur Ermittlung einer Geschwindigkeit von zumindest einem Fahrzeug (14, 16) auf einer Fahrbahn (18) auf Basis einer Erfassung von relativen Änderungen einer Lichtintensität, welche durch das Fahrzeug (14, 16) erzeugt werden, **dadurch gekennzeichnet, dass** mittels eines ereignisbasierten Bildsensors (20), welcher eine Pixelmatrix (22) mit einer Vielzahl von Pixeln (24, 26) umfasst, zumindest zwei relative Änderungen einer Lichtintensität durch zumindest zwei der Pixel (24, 26) als Ereignisse (28, 30) erfasst und die Geschwindigkeit des Fahrzeugs (14, 16) aus einer zeitlichen Abfolge von erfassten Ereignissen (28, 30) ermittelt wird.

12. Verfahren nach Anspruch 11, **dadurch gekennzeichnet, dass** eine Plausibilität der bestimmten Geschwindigkeit anhand der zeitlichen Abfolge und einer gegenseitigen Anordnung derjenigen Pixel (24, 26) zueinander, deren erfasste Ereignisse (28, 30) bei der Ermittlung der Geschwindigkeit zugrunde gelegt werden, überprüft wird.

13. Verfahren nach Anspruch 11 oder 12, **dadurch gekennzeichnet, dass** Ereignisse (28, 30), welche in benachbarten Pixeln (24, 36) der Pixelmatrix (22) auftreten, in zusammengehörige Ereignisgruppen (62, 64) gruppiert werden, deren Bewegungen entlang eines Bildbereichs (66) des ereignisbasierten Bildsensors (20) durch die Erfassung zeitlich nachgelagerter Ereignisse (28', 30'), die einer Ereignisgruppe (62, 64) zuordenbar sind, nachverfolgt werden, wobei die Geschwindigkeit des Fahrzeugs (14, 16) aus einer Geschwindigkeit einer Bewegung zumindest einer Ereignisgruppe (62, 64) entlang des Bildbereichs (66) ermittelt wird.

14. Verfahren nach Anspruch 11 oder 12, **dadurch gekennzeichnet, dass** in einem Bildbereich (66 des ereignisbasierten Bildsensors mehrere Regionen von Interesse (68, 70, 72, 74) definiert werden, welchen jeweils ein Teilbereich der Pixelmatrix (22) zugeordnet wird, wobei die Geschwindigkeit des Fahrzeugs (14, 16) aus einem zeitlichen Abstand zwischen einem Auftreten von Ereignissen (28, 30) in zumindest zwei Regionen von Interesse (68, 70), welche unterschiedliche Spalten (76, 78) der Pixelmatrix (22) umfassen, ermittelt wird.

15. Verfahren nach Anspruch 14, **dadurch gekennzeichnet, dass** eine Plausibilität der bestimmten Geschwindigkeit anhand eines Vergleichs einer zeitlichen Abfolge von Ereignissen in zumindest zwei Regionen von Interesse (68, 72, welche unterschiedliche Zeilen (80, 82) der Pixelmatrix (22) umfassen, überprüft wird.
